# EUROPÄISCHE PATENTSCHRIFT

(11) **EP 3 350 043 B1**
(45) Veröffentlichungstag und Bekanntmachung des Hinweises auf die Patenterteilung: **21.08.2019**
(21) Anmeldenummer: 16763004.5
(22) Anmeldetag: 02.09.2016
(51) Int. Cl.: B60T 13/74

(54) **ELEKTROMECHANISCHER BREMSKRAFTVERSTÄRKER UND VERFAHREN ZUR HERSTELLUNG EINES ELEKTROMECHANISCHEN BREMSKRAFTVERSTÄRKERS**
ELECTROMECHANICAL BRAKE BOOSTER AND METHOD FOR PRODUCING AN ELECTROMECHANICAL BRAKE BOOSTER
SERVOFREIN ÉLECTROMÉCANIQUE ET PROCÉDÉ DE FABRICATION D'UN SERVOFREIN ÉLECTROMÉCANIQUE

(30) Priorität: 14.09.2015 DE 102015217518
(43) Veröffentlichungstag der Anmeldung: 25.07.2018
(73) Patentinhaber: Robert Bosch GmbH, 70442 Stuttgart (DE)
(72) Erfinder: PANUNZIO, Giammaria, 71634 Ludwigsburg (DE); WEISSINGER, Daniel, 70825 Korntal-Muenchingen (DE); BOLLWERK, Andre, 71711 Steinheim An Der Murr (DE); NAGEL, Willi, 71686 Remseck/Hochdorf (DE)
(86) Internationale Anmeldenummer: PCT/EP2016/070730
(87) Internationale Veröffentlichungsnummer: WO 2017/045936

(56) Entgegenhaltungen:
- EP-A1- 2 636 565
- EP-A1- 2 666 686
- WO-A1-2014/012702
- WO-A1-2015/114842
- CN-U- 203 005 406
- DE-A1-102013 006 795
- FR-A1- 2 810 953
- FR-A1- 2 947 228
- JP-A- 2012 035 814
- US-A1- 2014 090 371
- US-A1- 2014 283 513

## Beschreibung

Die Erfindung betrifft einen elektromechanischen Bremskraftverstärker für ein Kraftfahrzeug. Die Erfindung betrifft des Weiteren ein Verfahren zur Herstellung eines elektromechanischen Bremskraftverstärkers für ein Kraftfahrzeug.

### Stand der Technik

Für die zukünftigen Antriebskonzepte von Kraftfahrzeugen werden alternative Bremsdruckaufbauvorrichtungen benötigt, da wenig, oder kein Vakuum vorliegt, um einen konventionellen Vakuumbremskraftverstärker zu betreiben. Hierzu wurden elektromotorische Bremskraftverstärker entwickelt.

Die DE 10 2012 014 361 A1 offenbart eine Betätigungseinrichtung für einen Hauptbremszylinder eines Kraftfahrzeuges, umfassend ein Gehäuse zur Anordnung zwischen dem Hauptbremszylinder und einem Bremspedal, durch das ein Druckorgan zur Betätigung eines Betätigungskolbens des Hauptbremszylinders verläuft, einen Elektromotor, eine Schnecke, die durch den Elektromotor angetrieben ist und das Druckorgan kreuzt, und ein in dem Gehäuse angeordnetes Getriebe, das die Schnecke mit dem Betätigungskolben derart koppelt, um eine Drehbewegung der Schnecke in eine Translationsbewegung des Betätigungskolbens zu übersetzen.

Die Offenlegungsschrift FR 2947228 befasst sich mit einem Bremssystem, das einen Bremskraftverstärker mit Elektromotor enthält, der die Schubstange des Kolbens des Hauptzylinders durch eine Verbindung über eine Kugelumlaufspindel antreibt und von einer mit dem Bremspedal verbundene Steuerstange betätigt wird.

Die Offenlegung EP 2 666 686 A1 offenbart eine elektrohydraulische Servobremse für einen Fahrzeugbremskreislauf, die mit einem Tandem-Hauptzylinder verbunden ist und durch das Bremspedal
gesteuert wird, wobei diese Servobremse mit einem Elektromotor durch einen Zahnstangen-Übertragungsmechanismus einen Betätigungskolben, der auf den Primärkolben des Hauptzylinders einwirkt, steuert.

Der Erfindung liegt somit die Aufgabe zugrunde, einen verbesserten elektromechanischen Bremskraftverstärker bereitzustellen, welcher geringere Herstellungskosten und eine vereinfachte Herstellbarkeit aufweist.

Die Aufgabe wird mit einem elektromechanischen Bremskraftverstärker für ein Kraftfahrzeug mit den Merkmalen des Patentanspruchs 1 gelöst. Des Weiteren wird die Aufgabe mit einem Verfahren zur Herstellung eines elektromechanischen Bremskraftverstärkers für ein Kraftfahrzeug mit den Merkmalen des Patentanspruchs 11 gelöst.

### Offenbarung der Erfindung

Die vorliegende Erfindung schafft einen elektromechanischen Bremskraftverstärker für ein Kraftfahrzeug, mit einem eine erste Gehäusehälfte und eine zweite Gehäusehälfte aufweisenden Gehäuse, in welchem ein Elektromotor und ein Getriebe angeordnet sind, dadurch gekennzeichnet, dass an der ersten Gehäusehälfte eine erste Zentrieröffnung und eine zweite Zentrieröffnung und an der zweiten Gehäusehälfte eine erste Einbringöffnung und eine zweite Einbringöffnung ausgebildet sind, wobei die erste Zentrieröffnung zu der ersten Einbringöffnung und die zweite Zentrieröffnung zu der zweiten Einbringöffnung angeordnet sind, so dass die zweite Gehäusehälfte durch in Eingriff Bringen eines aus der ersten Zentrieröffnung hervorstehenden ersten Montagestifts in die erste Einbringöffnung und eines aus der zweiten Zentrieröffnung hervorstehenden zweiten Montagestifts in die zweite Einbringöffnung an der ersten Gehäusehälfte zentrierbar ist, und/oder der Elektromotor zum Getriebe durch einen Lagerschild des elektromechanischen Bremskraftverstärkers zentrierbar ist, indem der an einer Achse eines Getriebezahnrads des Getriebes befestigte Lagerschild eine Aufnahmeöffnung aufweist, in welche ein Gehäuseabschnitt des Elektromotor eingefügt ist.

Die vorliegende Erfindung schafft des Weiteren ein Verfahren zur Herstellung eines elektromechanischen Bremskraftverstärkers für ein Kraftfahrzeug. Das Verfahren umfasst ein Bereitstellen einer ersten Gehäusehälfte und einer zweiten Gehäusehälfte eines Gehäuses in welcher ein Elektromotor und ein Getriebe anordbar sind; Das Verfahren umfasst der Weiteren ein Bereitstellen einer ersten Zentrieröffnung und einer zweiten Zentrieröffnung an der ersten Gehäusehälfte und einer ersten Einbringöffnung und einer zweiten Einbringöffnung an der zweiten Gehäusehälfte, wobei die erste Zentrieröffnung zu der ersten Einbringöffnung und die zweite Zentrieröffnung zu der zweiten Einbringöffnung konzentrisch sind; Das Verfahren umfasst überdies ein in Eingriff Bringen eines aus der ersten Zentrieröffnung hervorstehenden ersten Montagestifts in die erste Einbringöffnung und eines aus der zweiten Zentrieröffnung hervorstehenden zweiten Montagestifts in die zweite Einbringöffnung zum Zentrieren der zweiten Gehäusehälfte an der ersten Gehäusehälfte; und/oder ein Zentrieren des Elektromotors zum Getriebe durch einen Lagerschild des elektromechanischen Bremskraftverstärkers durch Befestigen des Lagerschilds an einer Achse eines Getriebezahnrads des Getriebes und Anordnen des Lagerschilds derart, dass ein Gehäuseabschnitt des Elektromotor in eine Aufnahmeöffnung des Lagerschilds eingefügt wird.

Eine Idee der vorliegenden Erfindung ist es, die erste Gehäusehälfte und die zweite Gehäusehälfte des Gehäuses des elektromechanischen Bremskraftverstärkers bei der Herstellung des elektromechanischen Bremskraftverstärkers zu zentrieren. Durch Verwendung von Montagestiften ist es in vorteilhafter Weise möglich, die erste Gehäusehälfte und die zweite Gehäusehälfte in einer Montagelinie elektromechanischen Bremskraftverstärkers zu zentrieren. Somit ist das Herstellungsverfahren in effizienter Weise durchführbar.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass ein Gehäuseboden der ersten Gehäusehälfte eine dritte Zentrieröffnung aufweist, in welche ein dritter Montagestift zum Positionieren der ersten Gehäusehälfte relativ zu der zweiten Gehäusehälfte einsteckbar ist. Somit ist die erste Gehäusehälfte in effizienter Weise relativ zu der zweiten Gehäusehälfte positionierbar.

Gemäß einer weiteren bevorzugten Weiterbildung ist vorgesehen, dass die an der ersten Gehäusehälfte ausgebildete dritte Zentrieröffnung eine in einen Gehäuseboden eingebrachte Bohrung aufweist, und wobei die an der ersten Gehäusehälfte ausgebildete erste Zentrieröffnung, welche an einem, dem Gehäuseboden gegenüberliegend angeordneten Gehäuseabschnitt der ersten Gehäusehälfte angeordnet ist, eine in den Gehäuseabschnitt der ersten Gehäusehälfte eingebrachte Bohrung aufweist. Die an der ersten Gehäusehälfte ausgebildete dritte Zentrieröffnung und die an der ersten Gehäusehälfte ausgebildete erste Zentrieröffnung sind durch die integrale Ausbildung mit der ersten Gehäusehälfte vorzugsweise stabil ausgebildet.

Gemäß einer weiteren bevorzugten Weiterbildung ist vorgesehen, dass die erste Zentrieröffnung und die dritte Zentrieröffnung entlang einer gemeinsamen Längsachse des Gehäuses angeordnet sind. Somit kann eine stabile Zentrierung der ersten Gehäusehälfte zur zweiten Gehäusehälfte ohne ein Verkippen einer der Gehäusehälften ermöglicht werden.

Gemäß einer weiteren bevorzugten Weiterbildung ist vorgesehen, dass die in der zweiten Gehäusehälfte ausgebildete erste Einbringöffnung als Durchzug ausgebildet ist, wobei sich die in der ersten Gehäusehälfte ausgebildete erste Zentrieröffnung durch die erste Einbringöffnung erstreckt. Durch Ausbildung der in der zweiten Gehäusehälfte ausgebildeten ersten Einbringöffnung als Durchzug kann eine verbesserte Stabilität der ersten Einbringöffnung gegenüber Querkräften erreicht werden.

Gemäß einer weiteren bevorzugten Weiterbildung ist vorgesehen, dass die in der ersten Gehäusehälfte ausgebildete zweite Zentrieröffnung und in die in der zweiten Gehäusehälfte ausgebildete zweite Einbringöffnung als Langloch ausgebildet sind, wobei die zweite Zentrieröffnung und die zweite Einbringöffnung entlang einer sich zwischen der zweiten Einbringöffnung und der ersten Einbringöffnung erstreckenden Geraden ausgerichtet ist. Durch Ausbilden der in der ersten Gehäusehälfte ausgebildeten zweiten Zentrieröffnung und in der in der zweiten Gehäusehälfte ausgebildeten zweiten Einbringöffnung als Langloch kann ein einfaches Zentrieren der ersten Gehäusehälfte zur zweiten Gehäusehälfte ermöglicht werden.

Gemäß einer weiteren bevorzugten Weiterbildung ist vorgesehen, dass der erste Montagestift und/oder der zweite Montagestift mit der ersten Gehäusehälfte fest verbunden ist. Somit entfällt in vorteilhafter Weise ein Einfügen der Montagestifte in die jeweiligen Zentrieröffnungen.

Gemäß einer weiteren bevorzugten Weiterbildung ist vorgesehen, dass der Lagerschild in einer in der ersten Gehäusehälfte ausgebildeten Aussparung verpresst ist. Somit ist der Lagerschild in der ersten Gehäusehälfte vorzugsweise platzsparend und positionsfest anordbar.

Gemäß einer weiteren bevorzugten Weiterbildung ist vorgesehen, dass der Lagerschild einen Achsabstand zwischen dem Zahnrad des Getriebes und dem Motorritzel des Elektromotors festlegt. Somit kann in vorteilhafter Weise eine exakter Eingriff des Motorritzels des Elektromotors mit dem Zahnrad des Getriebes erreicht werden.

Gemäß einer weiteren bevorzugten Weiterbildung ist vorgesehen, dass in der in dem Lagerschild ausgebildeten Aufnahmeöffnung das Motorritzel des Elektromotors aufgenommen ist. Somit ist das Motorritzel derart anordbar, dass dieses mit dem Zahnrad des Getriebes kämmt.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine perspektivische Darstellung eines Getriebes eines elektromechanischen Bremskraftverstärkers für ein Kraftfahrzeug gemäß einer bevorzugten Ausführungsform der Erfindung;
- Fig. 2: eine perspektivische Darstellung eines Getriebes des elektromechanischen Bremskraftverstärkers für das Kraftfahrzeug gemäß der bevorzugten Ausführungsform der Erfindung;
- Fig. 3: eine Teilschnittansicht eines Gehäuses des elektromechanischen Bremskraftverstärkers für das Kraftfahrzeug gemäß der bevorzugten Ausführungsform der Erfindung;
- Fig. 4: eine perspektivische Darstellung des Gehäuses des elektromechanischen Bremskraftverstärkers für das Kraftfahrzeug gemäß der bevorzugten Ausführungsform der Erfindung;
- Fig. 5: ein Ablaufdiagramm eines Verfahrens zur Montage des elektromechanischen Bremskraftverstärkers für das Kraftfahrzeug gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

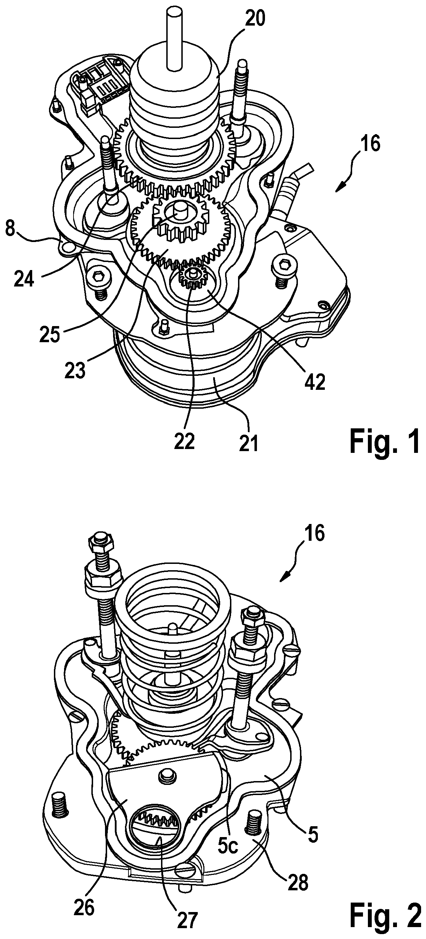

Fig. 1 zeigt eine perspektivische Darstellung eines Getriebes 16 eines elektromechanischen Bremskraftverstärkers 1 für ein Kraftfahrzeug gemäß einer bevorzugten Ausführungsform der Erfindung.

Das Getriebe 16 weist einen Elektromotor 21 bzw. eine Elektromotor/ Steuergeräteeinheit auf, wobei ein Motorritzel 22 ein gestuftes Zahnrad 23 bzw. Doppelzahnrad antreibt. Das Zahnrad 23 treibt wiederum ein Zahnrad 24 an, welches mit einer (in Fig. 1 nicht gezeigten) Spindelmutter verbunden ist. Um die Spindelmutter herum ist vorzugsweisen ein Faltenbalg 20 angeordnet.

Das Zahnrad 23 ist auf einer Achse 25 drehbar gelagert. Zwischen dem Motorritzel 22 und dem Elektromotor 21 ist vorzugsweise ein Kugellager angeordnet.

Fig. 2 zeigt eine perspektivische Darstellung eines Getriebes des elektromechanischen Bremskraftverstärkers für das Kraftfahrzeug gemäß der bevorzugten Ausführungsform der Erfindung.

In die eine Gehäusehälfte 5 ist ein Lagerschild 26 montiert bzw. eingepresst. Die Achse 25 ist sowohl mit der ersten Gehäusehälfte 5 als auch mit dem Lagerschild 26 fest verbunden. Eine Positionierung bzw. Zentrierung des Elektromotors 21 ist über eine Aufnahmeöffnung 27 im Lagerschild 26 ausführbar. In die Aufnahmeöffnung 27 ist ein Gehäuseabschnitt 42 des Elektromotors 21 eingefügt.

Der Elektromotor 21 ist vorzugsweise an einem Gehäuseflansch 28 verschraubt. Alternativ kann die Motor/Steuergeräteeinheit 21 auch in sonstiger geeigneter Weise mit dem Gehäuseflansch 28 verbunden sein. Durch den vorstehend erwähnten Aufbau sind das Zahnrad 23, das Zahnrad 24, das Lagerschild 26 sowie der Elektromotor 21 direkt über die erste Gehäusehälfte 5 zentriert bzw. fixiert. Die erste Gehäusehälfte 5 ist vorzugsweise aus Aluminium ausgebildet. Eine vorzugsweise aus Kunststoff ausgebildete zweite Gehäusehälfte 8 muss somit keine tragende Funktion aufweisen.

Ein Achsabstand zwischen dem Zahnrad 23 und dem (in Fig. 2 nicht gezeigten) Motorritzel, welcher präzise sein muss, wird durch das Lagerschild 26 gewährleistet. Das Lagerschild 26 ist vorzugsweise als Blech-Stanzteil ausgebildet.

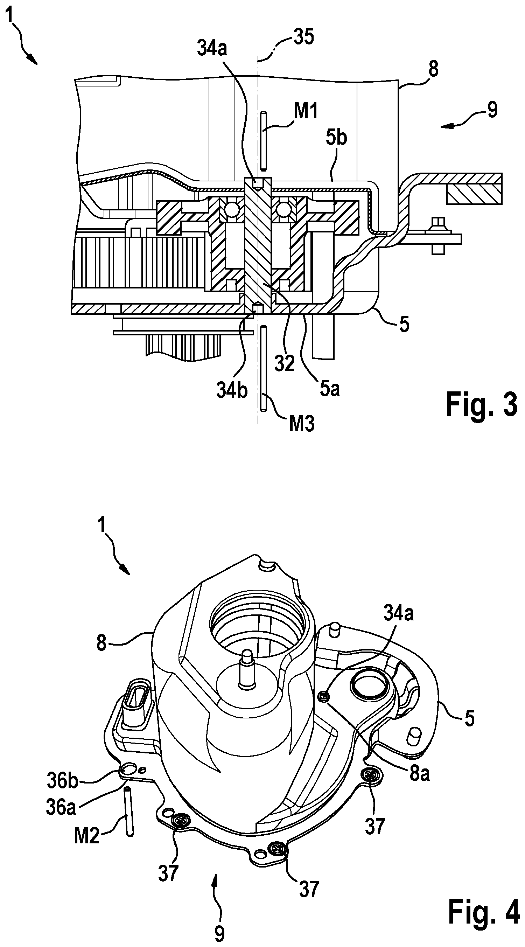

Fig. 3 zeigt eine Teilschnittansicht eines Gehäuses des elektromechanischen Bremskraftverstärkers für das Kraftfahrzeug gemäß der bevorzugten Ausführungsform der Erfindung.

Die erste Gehäusehälfte 5 und die zweite Gehäusehälfte 8 sind vorzugsweise aus Stahl ausgebildet. Da kein separates Lagerschild vorgesehen ist, muss eine exakte Positionierung der ersten Gehäusehälfte 5 zur zweiten Gehäusehälfte 8 durchgeführt werden.

Die erste Gehäusehälfte 5 weist eine erste Zentrieröffnung 34a und eine zweite Zentrieröffnung 36a auf. Die zweite Gehäusehälfte 8 weist eine (in Fig. 3 nicht gezeigte) erste Einbringöffnung und eine (in Fig. 3 nicht gezeigte) zweite Einbringöffnung auf.

Die erste Zentrieröffnung 34a ist vorzugsweise konzentrisch zu der ersten Einbringöffnung 8a angeordnet. Die zweite Zentrieröffnung 36a ist vorzugsweise konzentrisch zu der zweiten Einbringöffnung 36b angeordnet.

Die zweite Gehäusehälfte 8 ist durch in Eingriff Bringen eines aus der ersten Zentrieröffnung 34a hervorstehenden ersten Montagestifts M1 in die erste Einbringöffnung 8a und eines aus der (in Fig. 3 nicht gezeigten) zweiten Zentrieröffnung 36a hervorstehenden zweiten Montagestifts M2 in die zweite Einbringöffnung 36b an der ersten Gehäusehälfte 5 zentrierbar.

Ein Gehäuseboden 5a der ersten Gehäusehälfte 5 weist vorzugsweise eine dritte Zentrieröffnung 34b auf, in welche ein dritter Montagestift M3 zum Positionieren der ersten Gehäusehälfte 5 relativ zu der zweiten Gehäusehälfte 8 einsteckbar ist. Die erste Zentrieröffnung 34a und die dritte Zentrieröffnung 34b sind vorzugsweise als Bohrung oder alternativ als Konus ausgebildet. Alternativ kann der jeweilige Montagestift beispielsweise eine Bohrung aufweisen und die jeweilige Zentrieröffnung in Form eines Zapfens ausgebildet sein, welcher in die in dem Montagestift ausgebildete Bohrung einfügbar ist.

Die erste Zentrieröffnung 34a und die dritte Zentrieröffnung 34b sind vorzugsweise entlang einer gemeinsamen Längsachse 35 des Gehäuses 9 angeordnet.

Fig. 4 zeigt eine perspektivische Darstellung des Gehäuses des elektromechanischen Bremskraftverstärkers für das Kraftfahrzeug gemäß der bevorzugten Ausführungsform der Erfindung.

Die zweite Gehäusehälfte 8 ist durch in Eingriff Bringen des aus der zweiten Zentrieröffnung 36a hervorstehenden zweiten Montagestifts M2 in die zweite Einbringöffnung 36b an der ersten Gehäusehälfte 5 zentrierbar.

Die in der zweiten Gehäusehälfte 8 ausgebildete erste Einbringöffnung 8a ist vorzugsweise als Durchzug ausgebildet, wobei sich die in der ersten Gehäusehälfte 5 ausgebildete, erste Zentrieröffnung 34a durch die erste Einbringöffnung 8a erstreckt.

Die in der ersten Gehäusehälfte 5 ausgebildete zweite Zentrieröffnung 36a und in die in der zweiten Gehäusehälfte 8 ausgebildete zweite Einbringöffnung 36b sind vorzugsweise als Langloch ausgebildet, wobei die zweite Zentrieröffnung 36a und die zweite Einbringöffnung 36b entlang einer sich zwischen der zweiten Einbringöffnung 36b und der ersten Einbringöffnung 8a erstreckenden Geraden ausgerichtet ist.

Die erste Gehäusehälfte 5 ist vorzugsweise an der zweiten Gehäusehälfte 8 mittels einer Mehrzahl von Schrauben 37 verschraubbar.

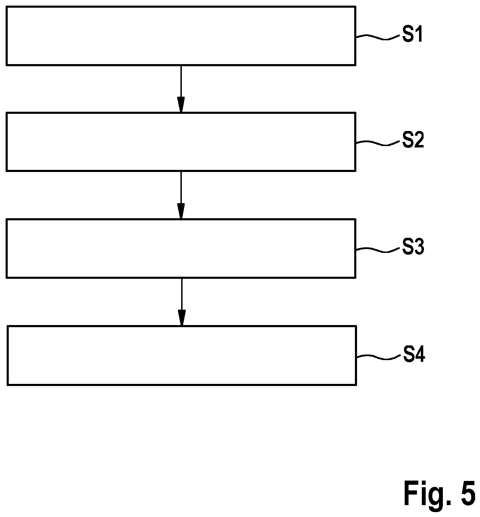

Fig. 5 zeigt ein Ablaufdiagramm eines Verfahrens zur Montage des elektromechanischen Bremskraftverstärkers für das Kraftfahrzeug gemäß der bevorzugten Ausführungsform der Erfindung.

Das Verfahren umfasst ein Bereitstellen S1 einer ersten Gehäusehälfte und einer zweiten Gehäusehälfte eines Gehäuses, in welchem ein Elektromotor über ein Getriebe mit einer Spindel wirkverbunden ist. Das Verfahren umfasst des Weiteren ein Bereitstellen S2 einer ersten Zentrieröffnung und einer zweiten Zentrieröffnung an der ersten Gehäusehälfte und einer ersten Einbringöffnung und einer zweiten Einbringöffnung an der zweiten Gehäusehälfte, wobei die erste Zentrieröffnung zu der ersten Einbringöffnung und die zweite Zentrieröffnung zu der zweiten Einbringöffnung konzentrisch angeordnet sind.

Das Verfahren umfasst des Weiteren ein in Eingriff Bringen S3 eines aus der ersten Zentrieröffnung hervorstehenden ersten Montagestifts in die erste Einbringöffnung und eines aus der zweiten Zentrieröffnung hervorstehenden zweiten Montagestifts in die zweite Einbringöffnung zum Zentrieren der zweiten Gehäusehälfte an der ersten Gehäusehälfte und/oder ein Zentrieren S4 des Elektromotors zum Getriebe durch einen Lagerschild des elektromechanischen Bremskraftverstärkers durch Befestigen des Lagerschilds an einer Achse eines Getriebezahnrads des Getriebes und Anordnen des Lagerschilds derart, dass ein Motorritzel des Elektromotors in eine Aufnahmeöffnung des Lagerschilds eingefügt wird, und das in die Aufnahmeöffnung eingefügte Motorritzel mit dem Zahnrad des Getriebes kämmt.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise sind die Zentrieröffnungen und/oder die Einbringöffnungen an einer anderen geeigneten Position am Gehäuse anordbar.

### Bezugszeichenliste

- 1: Bremskraftverstärker
- 5: erste Gehäusehälfte
- 5a: Gehäuseboden
- 5b: Gehäuseabschnitt
- 5c: Aussparung
- 8: zweite Gehäusehälfte
- 8a: erste Einbringöffnung
- 9: Gehäuse
- 16: Getriebe
- 20: Faltenbalg
- 21: Elektromotor
- 22: Motorritzel
- 23: Doppelzahnrad
- 24: Zahnrad
- 25: Achse
- 26: Lagerschild
- 27: Aufnahmeöffnung
- 28: Gehäuseflansch
- 34a: erste Zentrieröffnung
- 34b: dritte Zentrieröffnung
- 35: Längsachse
- 36a: zweite Zentrieröffnung
- 36b: zweite Einbringöffnung
- 37: Schrauben
- 42: Gehäuseabschnitt des Elektromotors
- M1: erster Montagestift
- M2: zweiter Montagestift
- M3: dritter Montagestift

## Patentansprüche

1. Elektromechanischer Bremskraftverstärker (1) für ein Kraftfahrzeug, mit: einem eine erste Gehäusehälfte (5) und eine zweite Gehäusehälfte (8) aufweisenden Gehäuse (9), in welchem ein Elektromotor (21) und ein Getriebe (16) angeordnet sind, wobei an der ersten Gehäusehälfte (5) eine erste Zentrieröffnung (34a) und eine zweite Zentrieröffnung (36a) und an der zweiten Gehäusehälfte eine erste Einbringöffnung (8a) und eine zweite Einbringöffnung (36b) ausgebildet sind, wobei die erste Zentrieröffnung (34a) zu der ersten Einbringöffnung (8a) und die zweite Zentrieröffnung (36a) zu der zweiten Einbringöffnung (36b) angeordnet sind, so dass die zweite Gehäusehälfte (8) durch in Eingriff Bringen eines aus der ersten Zentrieröffnung (34a) hervorstehenden ersten Montagestifts (M1) in die erste Einbringöffnung (8a) und eines aus der zweiten Zentrieröffnung (36a) hervorstehenden zweiten Montagestifts (M2) in die zweite Einbringöffnung (36b) an der ersten Gehäusehälfte (5) zentrierbar ist, und/oder der Elektromotor (21) zum Getriebe (16) durch einen Lagerschild (26) des elektromechanischen Bremskraftverstärkers (1) zentrierbar ist, indem der an einer Achse (25) eines Getriebezahnrads (23) des Getriebes (16) befestigte Lagerschild (26) eine Aufnahmeöffnung (27) aufweist, in welche ein Gehäuseabschnitt (42) des Elektromotor (21) eingefügt ist.

2. Elektromechanischer Bremskraftverstärker nach Anspruch 1, **dadurch gekennzeichnet, dass** ein Gehäuseboden (5a) der ersten Gehäusehälfte (5) eine dritte Zentrieröffnung (34b) aufweist, in welche ein dritter Montagestift (M3) zum Positionieren der ersten Gehäusehälfte (5) relativ zu der zweiten Gehäusehälfte (8) einsteckbar ist.

3. Elektromechanischer Bremskraftverstärker nach Anspruch 2, **dadurch gekennzeichnet, dass** die an der ersten Gehäusehälfte (5) ausgebildete dritte Zentrieröffnung (34b) eine in einen Gehäuseboden (5a) eingebrachte Bohrung aufweist, und wobei die an der ersten Gehäusehälfte (5) ausgebildete erste Zentrieröffnung (34a), welche an einem, dem Gehäuseboden (5a) gegenüberliegend angeordneten Gehäuseabschnitt (5b) der ersten Gehäusehälfte (5) angeordnet ist, eine in den Gehäuseabschnitt (5b) der ersten Gehäusehälfte (5) eingebrachte Bohrung aufweist.

4. Elektromechanischer Bremskraftverstärker nach einem der vorhergehenden Ansprüche, **dadurch gekennzeichnet, dass** die erste Zentrieröffnung (34a) und die dritte Zentrieröffnung (34b) entlang einer gemeinsamen Längsachse (35) des Gehäuses (9) angeordnet sind.

5. Elektromechanischer Bremskraftverstärker nach einem der vorhergehenden Ansprüche, **dadurch gekennzeichnet, dass** die in der zweiten Gehäusehälfte (8) ausgebildete erste Einbringöffnung (8a) als Durchzug ausgebildet ist, wobei sich die in der ersten Gehäusehälfte (5) ausgebildete, erste Zentrieröffnung (34a) durch die erste Einbringöffnung (8a) erstreckt.

6. Elektromechanischer Bremskraftverstärker nach einem der vorhergehenden Ansprüche, **dadurch gekennzeichnet, dass** die in der ersten Gehäusehälfte (5) ausgebildete zweite Zentrieröffnung (36a) und in die in der zweiten Gehäusehälfte (8) ausgebildete zweite Einbringöffnung (36b) als Langloch ausgebildet sind, wobei die zweite Zentrieröffnung (36a) und die zweite Einbringöffnung (36b) entlang einer sich zwischen der zweiten Einbringöffnung (36b) und der ersten Einbringöffnung (8a) erstreckenden Geraden ausgerichtet ist.

7. Elektromechanischer Bremskraftverstärker nach einem der vorhergehenden Ansprüche, **dadurch gekennzeichnet, dass** der erste Montagestift (M1) und/oder der zweite Montagestift (M2) mit der ersten Gehäusehälfte fest verbunden ist.

8. Elektromechanischer Bremskraftverstärker nach Anspruch 1, **dadurch gekennzeichnet, dass** der Lagerschild (26) in einer in der ersten Gehäusehälfte (5) ausgebildeten Aussparung (5c) verpresst ist.

9. Elektromechanischer Bremskraftverstärker nach Anspruch 1 oder 8, **dadurch gekennzeichnet, dass** der Lagerschild (26) einen Achsabstand zwischen dem Zahnrad (23) des Getriebes (16) und einem Motorritzel (22) des Elektromotors (21) festlegt.

10. Elektromechanischer Bremskraftverstärker nach Anspruch 9, **dadurch gekennzeichnet, dass** in der in dem Lagerschild (26) ausgebildeten Aufnahmeöffnung (27) das Motorritzel (22) des Elektromotors (21) aufgenommen ist.

11. Verfahren zur Herstellung eines elektromechanischen Bremskraftverstärkers (1) für ein Kraftfahrzeug, mit den Schritten:
Bereitstellen (S1) einer ersten Gehäusehälfte (5) und einer zweiten Gehäusehälfte (8) eines Gehäuses (9) in welcher ein Elektromotor (21) und ein Getriebe (16) anordbar sind;
Bereitstellen (S2) einer ersten Zentrieröffnung (34a) und einer zweiten Zentrieröffnung (36a) an der ersten Gehäusehälfte (5) und einer ersten Einbringöffnung (8a) und einer zweiten Einbringöffnung (36b) an der zweiten Gehäusehälfte, wobei die erste Zentrieröffnung (34a) zu der ersten Einbringöffnung (8a) und die zweite Zentrieröffnung (36a) zu der zweiten Einbringöffnung (36b) konzentrisch sind;
in Eingriff Bringen (S3) eines aus der ersten Zentrieröffnung (34a) hervorstehenden ersten Montagestifts (M1) in die erste Einbringöffnung (8a) und eines aus der zweiten Zentrieröffnung (36a) hervorstehenden zweiten Montagestifts (M2) in die zweite Einbringöffnung (36b) zum Zentrieren der zweiten Gehäusehälfte (8) an der ersten Gehäusehälfte (5); und/oder
Zentrieren (S4) des Elektromotors (21) zum Getriebe (16) durch einen Lagerschild (26) des elektromechanischen Bremskraftverstärkers (1) durch Befestigen des Lagerschilds (26) an einer Achse (25) eines Getriebezahnrads (23) des Getriebes (16) und Anordnen des Lagerschilds (26) derart, dass ein Gehäuseabschnitt (42) des Elektromotor (21) in eine Aufnahmeöffnung (27) des Lagerschilds (26) eingefügt wird.

## Claims

1. Electromechanical brake booster (1) for a motor vehicle, comprising:
a housing (9) having a first housing half (5) and a second housing half (8), in which an electric motor (21) and a gearbox (16) are arranged, wherein a first centring opening (34a) and a second centring opening (36a) are formed on the first housing half (5), and a first insertion opening (8a) and a second insertion opening (36b) are formed on the second housing half, wherein the first centring opening (34a) is arranged in relation to the first insertion opening (8a) and the second centring opening (36a) is arranged in relation to the second insertion opening (36b) such that the second housing half (8) can be centred on the first housing half (5) by engaging a first mounting pin (M1) projecting out of the first centring opening (34a) in the first insertion opening (8a) and a second mounting pin (M2) projecting out of the second centring opening (36a) in the second insertion opening (36b), and/or the electric motor (21) can be centred relative to the gearbox (16) by a bearing plate (26) of the electromechanical brake booster (1) by the bearing plate (26), fixed to a shaft (25) of a gearbox gear (23) of the gearbox (16), having a receiving opening (27), into which a housing section (42) of the electric motor (21) is introduced.

2. Electromechanical brake booster according to Claim 1, **characterized in that** a housing base (5a) of the first housing half (5) has a third centring opening (34b), into which a third mounting pin (M3) can be inserted in order to position the first housing half (5) relative to the second housing half (8).

3. Electromechanical brake booster according to Claim 2, **characterized in that** the third centring opening (34b) which is formed on the first housing half (5) has a bore introduced into a housing base (5a), and wherein the first centring opening (34a), which is formed on the first housing half (5) and which is arranged on a housing section (5b) of the first housing half (5) located opposite the housing base (5a), has a bore introduced into the housing section (5b) of the first housing half (5).

4. Electromechanical brake booster according to one of the preceding claims, **characterized in that** the first centring opening (34a) and the third centring opening (34b) are arranged along a common longitudinal axis (35) of the housing (9).

5. Electromechanical brake booster according to one of the preceding claims, **characterized in that** the first insertion opening (8a) formed in the second housing half (8) is formed as a passage, wherein the first centring opening (34a) formed in the first housing half (5) extends through the first insertion opening (8a).

6. Electromechanical brake booster according to one of the preceding claims, **characterized in that** the second centring opening (36a) formed in the first housing half (5) and the second insertion opening (36b) formed in the second housing half (8) are formed as a slot, wherein the second centring opening (36a) and the second insertion opening (36b) are aligned along a straight line extending between the second insertion opening (36b) and the first insertion opening (8a).

7. Electromechanical brake booster according to one of the preceding claims, **characterized in that** the first mounting pin (M1) and/or the second mounting pin (M2) is/are firmly connected to the first housing half.

8. Electromechanical brake booster according to Claim 1, **characterized in that** the bearing plate (26) is pressed into a recess (5c) formed in the first housing half (5).

9. Electromechanical brake booster according to Claim 1 or 8, **characterized in that** the bearing plate (26) defines an axial spacing between the gear (23) of the gearbox (16) and a motor pinion (22) of the electric motor (21).

10. Electromechanical brake booster according to Claim 9, **characterized in that** the motor pinion (22) of the electric motor (21) is accommodated in the receiving opening (27) formed in the bearing plate (26) .

11. Method for producing an electromechanical brake booster (1) for a motor vehicle, comprising the steps:
providing (S1) a first housing half (5) and a second housing half (8) of a housing (9) in which an electric motor (21) and a gearbox (16) can be arranged;
providing (S2) a first centring opening (34a) and a second centring opening (36a) on the first housing half (5) and a first insertion opening (8a) and a second insertion opening (36b) on the second housing half, wherein the first centring opening (34a) is concentric with the first insertion opening (8a) and the second centring opening (36a) is concentric with the second insertion opening (36b);
engaging (S3) a first mounting pin (M1) projecting out of the first centring opening (34a) in the first insertion opening (8a) and a second mounting pin (M2) projecting out of the second centring opening (36a) in the second insertion opening (36b) in order to centre the second housing half (8) on the first housing half (5); and/or
centring (S4) the electric motor (21) relative to the gearbox (16) by means of a bearing plate (26) of the electromechanical brake booster (1) by fastening the bearing plate (26) to a shaft (25) of a gearbox gear (23) of the gearbox (16) and arranging the bearing plate (26) in such a way that a housing section (42) of the electric motor (21) is introduced into a receiving opening (27) of the bearing plate (26).

## Revendications

1. Servofrein électromécanique (1) pour un véhicule automobile, avec un carter (9) présentant une première moitié de carter (5) et une seconde moitié de carter (8), dans lequel un moteur électrique (21) et un engrenage (16) sont disposés, dans lequel une première ouverture de centrage (34a) et une deuxième ouverture de centrage (36a) sont formées sur la première moitié de carter (5) et une première ouverture d'introduction (8a) et une deuxième ouverture d'introduction (36b) sont formées sur la seconde moitié de carter (8), dans lequel la première ouverture de centrage (34a) est disposée par rapport à la première ouverture d'introduction (8a) et la deuxième ouverture de centrage (36a) est disposée par rapport à la deuxième ouverture d'introduction (36b) de telle manière que la seconde moitié de carter (8) puisse être centrée sur la première moitié de carter (5) par l'engagement d'une première tige de montage (M1) sortant de la première ouverture de centrage (34a) dans la première ouverture d'introduction (8a) et d'une deuxième tige de montage (M2) sortant de la deuxième ouverture de centrage (36a) dans la deuxième ouverture d'introduction (36b), et/ou le moteur électrique (21) peut être centré par rapport à l'engrenage (16) par un flasque (26) du servofrein électromécanique (1), par le fait que le flasque (26) fixé à un axe (25) d'une roue dentée d'engrenage (23) de l'engrenage (16) présente une ouverture de réception (27), dans laquelle une partie de boîtier (42) du moteur électrique (21) est insérée.

2. Servofrein électromécanique selon la revendication 1, **caractérisé en ce qu'**un fond de carter (5a) de la première moitié de carter (5) présente une troisième ouverture de centrage (34b), dans laquelle une troisième tige de montage (M3) peut être engagée pour le positionnement de la première moitié de carter (5) par rapport à la seconde moitié de carter (8).

3. Servofrein électromécanique selon la revendication 2, **caractérisé en ce que** la troisième ouverture de centrage (34b) formée sur la première moitié de carter (5) présente un trou pratiqué dans un fond de carter (5a), et dans lequel la première ouverture de centrage (5a) formée sur la première moitié de carter (5), qui est disposée sur une partie de carter (5b) de la première moitié de carter (5) disposée en face du fond de carter (5a), présente un trou pratiqué dans la partie de carter (5b) de la première moitié de carter (5).

4. Servofrein électromécanique selon l'une quelconque des revendications précédentes, **caractérisé en ce que** la première ouverture de centrage (34a) et la troisième ouverture de centrage (34b) sont disposées le long d'un axe longitudinal commun (35) du carter (9).

5. Servofrein électromécanique selon l'une quelconque des revendications précédentes, **caractérisé en ce que** la première ouverture d'introduction (8a) formée dans la seconde moitié de carter (8) est réalisée sous la forme d'un passage, dans lequel la première ouverture de centrage (34a) formée dans la première moitié de carter (5) s'étend à travers la première ouverture d'introduction (8a).

6. Servofrein électromécanique selon l'une quelconque des revendications précédentes, **caractérisé en ce que** la deuxième ouverture de centrage (36a) formée dans la première moitié de carter (5) et la deuxième ouverture d'introduction (36b) formée dans la seconde moitié de carter (8) sont réalisées sous forme de trou oblong, dans lequel la deuxième ouverture de centrage (36a) et la deuxième ouverture d'introduction (36b) sont orientées le long d'une droite s'étendant entre la deuxième ouverture d'introduction (36b) et la première ouverture d'introduction (8a).

7. Servofrein électromécanique selon l'une quelconque des revendications précédentes, **caractérisé en ce que** la première tige de montage (M1) et/ou la deuxième tige de montage (M2) est assemblée solidement à la première moitié de carter.

8. Servofrein électromécanique selon la revendication 1, **caractérisé en ce que** le flasque (26) est serti dans une découpe (5c) formée dans la première moitié de carter (5).

9. Servofrein électromécanique selon une revendication 1 ou 8, **caractérisé en ce que** le flasque (26) définit une distance axiale entre la roue dentée (23) de l'engrenage (16) et un pignon de moteur (22) du moteur électrique (21).

10. Servofrein électromécanique selon la revendication 9, **caractérisé en ce que** le pignon de moteur (22) du moteur électrique (21) est logé dans l'ouverture de réception (27) formée dans le flasque (26).

11. Procédé de fabrication d'un servofrein électromécanique (1) pour un véhicule automobile, comprenant les étapes suivantes:
préparer (S1) une première moitié de carter (5) et une seconde moitié de carter (8) d'un carter (9) dans lequel un moteur électrique (21) et un engrenage (16) peuvent être disposés;
préparer (S2) une première ouverture de centrage (34a) et une deuxième ouverture de centrage (36a) sur la première moitié de carter (5) et une première ouverture d'introduction (8a) et une deuxième ouverture d'introduction (36b) sur la seconde moitié de carter, dans lequel la première ouverture de centrage (34a) est concentrique à la première ouverture d'introduction (8a) et la deuxième ouverture de centrage (36a) est concentrique à la deuxième ouverture d'introduction (36b) ;
engager (S3) une première tige de montage (M1) sortant de la première ouverture de centrage (34a) dans la première ouverture d'introduction (8a) et une deuxième tige de montage (M2) sortant de la deuxième ouverture de centrage (36a) dans la deuxième ouverture d'introduction (36b) pour le centrage de la seconde moitié de carter (8) sur la première moitié de carter (5); et/ou
centrer (S4) le moteur électrique (21) par rapport à l'engrenage (16) au moyen d'un flasque (26) du servofrein électromécanique (1) par fixation du flasque (26) à un axe (25) d'une roue dentée d'engrenage (23) de l'engrenage (16) et agencer le flasque (26) de telle manière qu'une partie de boîtier (42) du moteur électrique (21) soit insérée dans une ouverture de réception (27) du flasque (26).
